# EUROPEAN PATENT APPLICATION

(11) **EP 4 365 571 A1**
(43) Date of publication of application: **08.05.2024**
(21) Application number: 22205103.9
(22) Date of filing: 02.11.2022
(51) Int. Cl.: G01N 15/06, G01N 15/14

(54) **APPARATUS FOR CHARACTERISING PARTICLES**

(71) Applicant: Malvern Panalytical Limited, Malvern, Worcestershire WR14 1XZ (GB)
(72) Inventor: Latunde-Dada, Seyi, Malvern, WR14 1XZ (GB)
(74) Representative: Barker Brettell LLP

(57) **Abstract**

An apparatus (100) is provided for characterising particles using nanoparticle tracking analysis. The apparatus comprises: a cell (101) for containing a sample comprising a plurality of particles suspended in a fluid; a light source (102) configured to illuminate the sample; an imaging system (103) configured to collect light (112) scattered or fluoresced by particles moving within the cell (101) and within a detection region (111) of the imaging system (103) and capture a video of the particles moving within the detection region (111); and a computer (104). The computer is configured to process the video to automatically determine a depth of the detection region (111). Determining the depth of the detection region (111) comprises: tracking the particles moving within the detection region (111), thereby producing a track for each of the particles; and analysing how a measured property of the tracks within a subsection of the video changes as the size of the subsection is varied.

## Description

### Field of the invention

The present invention relates to nanoparticle tracking analysis, specifically to apparatuses and methods for measuring particle properties without instrument calibration.

### Background

Nanoparticle tracking analysis (NTA) is a method of characterising particles suspended in a fluid by tracking the movement of individual particles. Typically, the method comprises illuminating a sample comprising a plurality of particles suspended in a fluid, collecting light scattered or fluoresced by the particles, and capturing a video of the particles as they move within the fluid. The video is analysed frame-by-frame to track the movement of the particles, the movement caused by Brownian motion and/or bulk flow. The fluid may be a liquid (e.g. water, or some other liquid), or may be a gas (e.g. air).

It may be desirable to determine the concentration of the particles in the fluid. To calculate concentration, the number of particles within an NTA device's detection region (a three-dimensional volume within the sample that is captured in the video) can be counted. If the volume of the detection region is known, the concentration can be determined from the ratio of the number of particles and the detection region. However, determining the depth of the detection region is difficult. The depth will be dependent on the imaging system itself, environmental factors, and differing optical properties of samples, for example.

Therefore, NTA devices of the prior art require instrument calibration to determine the detection region. Calibration may involve first using a calibration sample to analyse the brightness of particles at different depths within the detection region volume. An example of an NTA calibration method is disclosed in EP3071944.

However, this requires additional steps and time (often taking several hours), precise calibration samples, and may need to be performed regularly in order to maintain accuracy. Thus, NTA methods and apparatuses that do not require calibration pose a significant advantage.

There has been some progress made in developing calibration-free NTA methods. In one calibration-free method, computational modelling of particle movement is used in combination with a priori knowledge of the particle's size (M Röding et al., Physics Review E 84, 031920, 20 September 2011).

Further improvement of calibration-free NTA techniques is desirable.

### Summary

According to a first aspect of the invention, there is provided an apparatus for characterising particles using nanoparticle tracking analysis, comprising:
a cell for containing a sample comprising a plurality of particles suspended in a fluid;
a light source configured to illuminate the sample;
an imaging system configured to collect light scattered or fluoresced by particles moving within the cell and within a detection region of the imaging system and capture a video of the particles moving within the detection region; and
a computer configured to process the video to automatically determine a depth of the detection region, determining the depth of the detection region comprising:
   tracking the particles moving within the detection region, thereby producing a track for each of the particles; and
   analysing how a measured property of the tracks within a subsection of the video changes as the size of the subsection is varied.

The approach is not computationally expensive and enables an accurate determination of the detection region. A track may be defined as a set of vectors defining a change in position of a particle from frame to frame in a video.

The subsection may be strip taken across the video, the strip defined by a parallel pair of faces. The strip may be in the shape of a parallelogram, or a rectangle. The parallel pair of faces may span the width of the video so that the strip spans the width of the video. Alternatively, the strip may not span the entire width of the video, so has a second pair of parallel faces perpendicular to a/the first pair of parallel faces, the strip being a rectangular region inside the video. The strip may be taken in the x or y directions (vertical or horizontal).

The size of the subsection may be varied by changing the width of the strip between the pair of faces. The computer may be further configured to record the measured property of the tracks as a function of the strip width.

The computer may be further configured to analyse the tracks within the subsection in order to classify each of the tracks as either:
(i) an *x*/*y* track, wherein the particle track is observed to cross one of the pair of faces; or
(ii) a *z* track, wherein the particle track begins and/or ends within the strip but is not observed to cross through one of the pairs or faces.

The computer may be further configured to record the measured property separately for the *x*/*y* tracks and the *z* tracks.

The computer may be further configured to:
compare the measured property for the *x*/*y* tracks and the measured property for the *z* tracks for each strip width; and
determine the depth of the detection region by finding a strip width where the measured property of the *x*/*y* tracks and the *z* tracks are equal or most similar, the determined depth of the detection region being equal to the strip width.

The measured property of the tracks may be selected from:
a count of the number *of x*/*y* tracks and the number of *z* tracks observed within a predefined time period;
a measure of the length of the *x*/*y* tracks and the length of the *z* tracks, the length of each track being the distance moved by the particle within the strip; or
a measure of the number of steps within the *x*/*y* tracks and the number of steps within the *z* tracks, the number of steps in each track being the number of frames of the video in which the particle moves within the strip.

The measured property may preferably be the count of the number *of x*/*y* tracks and the number of *z* tracks.

A plurality of strips for each strip width may be analysed, and the measured track property for the plurality of strips of each strip width mathematically combined.

The plurality of strips may be configured to:
cover a substantial portion of or the whole detection region; and/or
cover a plurality of areas of the detection region, the plurality of areas having different detection region depths.

Tracking the particles may comprise identifying a particle from a current frame of the video in a subsequent frame of the video.

Identifying the particle in the subsequent frame of the video may comprise identifying the nearest particle in the subsequent frame.

Identifying the nearest particle in the subsequent frame may comprise identifying the nearest particle within a tracking distance limit.

The computer may be further configured to calculate a concentration of the particles suspended in fluid, calculating the concentration comprising:
calculating the volume of the detection region using the determined depth; and
measuring the number of particles within the detection region.

According to a second embodiment of the invention, there is provided a computer implemented method for determining a depth of a detection region from video data obtained by nanoparticle tracking analysis, the method comprising:
tracking the particles moving within the detection region, thereby producing a track for each of the particles;
measuring a property of the tracks within a subsection of the video;
analysing how the measured property of the tracks within a subsection of the video changes as the size of the subsection is varied.

According to a third aspect of the invention, there is provided a machine-readable non-volatile storage medium comprising instructions for configuring a processor to perform a method, the method comprising:
determining the depth of a detection region from video data obtained by nanoparticle tracking analysis, determining depth comprising:
tracking the particles moving within the detection region, thereby producing a track for each of the particles;
measuring a property of the tracks within a subsection of the video;
analysing how the measured property of the tracks within a subsection of the video changes as the size of the subsection is varied.

The features described with reference to the first aspect may also be applied to either of the second aspect or the third aspect, including optional features. The features of each aspect may be combined with those of the example embodiments, and vice versa.

### Detailed description of drawings

Embodiments of the invention will now be described, by way of example only, with reference to the accompanying drawings:
Figure 1 shows an apparatus for characterising particles using NTA according to an embodiment of the present invention;
Figure 2 shows a detection region observed by the NTA apparatus;
Figure 3 shows a current frame and a subsequent frame of a video and illustrates how two-dimensional particle tracking is used in a known NTA process to determine a distance travelled by a particle due to Brownian motion;
Figure 4 shows a particle track resulting from Brownian motion;
Figure 5 shows examples of particle tracks moving into or out of a detection region;
Figure 6 shows particles moving within a subsection of a video and forming in-plane and out-of-plane tracks;
Figure 7 shows a subsection of a video, the subsection having avariable width;
Figure 8 shows an experimental test method used to verify a method according to an embodiment of the present invention;
Figure 9 shows results of the experimental test shown in Figure 8;
Figure 10 shows results of the experimental test shown in Figure 8;
Figure 11 shows the results of a method to calculate concentration of particles according to an embodiment of the present invention.

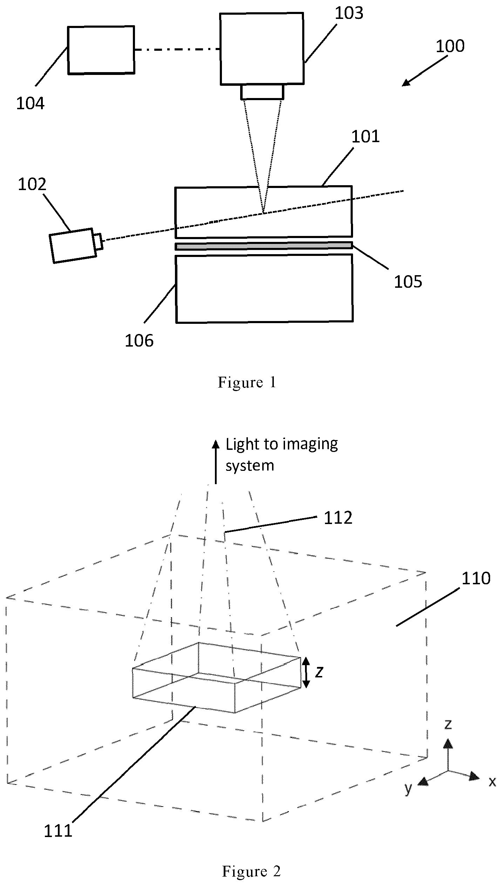

Figure 1 shows an apparatus 100 for characterising particles using nanoparticle tracking analysis (NTA) according to an embodiment of the invention. The apparatus comprises: a cell 101 for containing a sample comprising a plurality of particles suspended in a fluid; a light source 102 configured to illuminate the sample; an imaging system 103 configured to collect light scattered or fluoresced by the particles moving within the cell and within a detection region and capture a video of particles moving within the detection region.

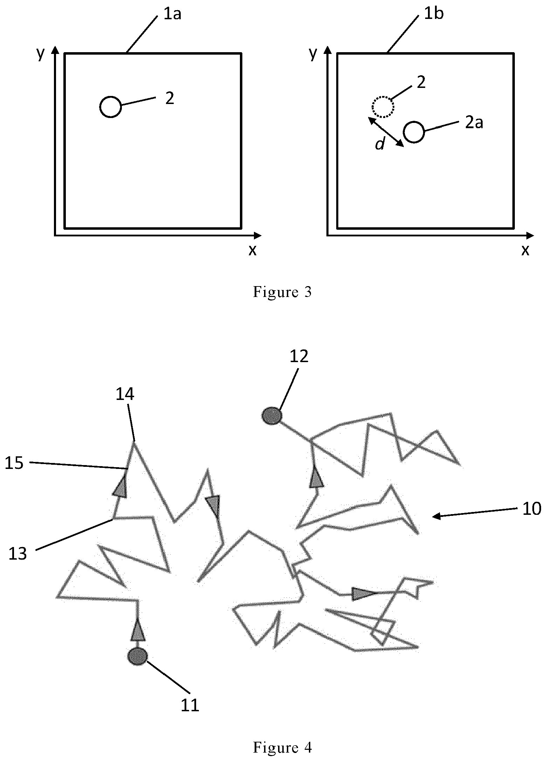

The apparatus 100 further comprises a computer 104 that is configured to process the video. Processing the video comprises tracking particles between subsequent frames of the video, as described in more detail with reference to Figure 3. The computer 104 is configured to track each of the plurality of particles within the detection region and determine a track of each particle's movement across a series of frames. The computer 104 is further configured to determine a depth of the detection region by analysing a measured property of the tracks.

The imaging system 103 may comprise a microscope and a camera configured to capture the video through the microscope. The microscope may, for example, comprise a 20x magnification objective lens and the camera may comprise a charge-coupled device (or CMOS device). The light source 102 may be a laser. In other embodiments, any suitable alternative imaging system and/or light source may be used. For example, the light may be refracted into the sample via a prism or via any other optical arrangement, which may comprise reflectors, lenses, prisms etc.

The apparatus may further comprise a glass wall 106 and a metalized surface 105 arranged between the glass wall 106 and the cell 101. The metalized surface 105 is arranged to reflect light scattered or fluoresced from the particles back towards the imaging system 103, thereby increasing particle contrast. The glass wall 106 may comprise part of a prism configured to refract light from the light source 102 to form a thin sheet of light substantially parallel to the metalized surface 105.

Figure 2 shows a sample volume comprising particles suspended in a fluid dispersant 110. Although not labelled in Figure 2, the volume of particles in sample volume 110 may be bounded by one or more cell walls.

A detection region 111 may comprise a sub-region of the sample volume 110. The detection region 111 is the region of the volume 110 in which light 112 scattered or fluoresced by particles moving within the detection region 111 is detectable by the imaging system. The detection region 111 may be thought of as a three-dimensional 'field of view' of the imaging system. The detection region 111 has a planar area in the x-y plane and a depth z.

Figure 3 illustrates how particle tracking is used in NTA. Figure 3 shows a current frame 1a of a video and a subsequent frame 1b of the video. A particle 2 is shown in the current frame 1a. In the subsequent frame 1b, the particle 2 has moved from the current position (shown as a broken line) to a new position 2a. Between the current frame 1a and subsequent frame 1b the particle 2 has travelled in two dimensions, i.e. in the x-direction and in the y-direction as defined by the axes in Figure 3. The Euclidean distance d the particle 2 has moved between the frames 1a, 1b is taken as the distance the particle 2 has moved due to Brownian motion.

In an example, the particle 2 is identified in the subsequent frame 1b using two-dimensional particle tracking. The particle 2 is identified in the subsequent frame 1b as the Euclidean nearest particle to the position of the particle 2 in the current frame 1a. The computer is configured to perform the two-dimensional particle tracking for each of the plurality of particles within the detection region.

The computer may be configured to repeat the tracking process over any suitable number of frames of the video. By tracking each particle across many frames, the computer generates a piecewise particle track for each of the plurality of particles.

The computer may be configured to impose a tracking distance limit when identifying particle 2 in the subsequent frame 1b. The tracking distance limit means that the computer only considers an area within a predetermined distance from the initial particle position 2a when identifying the Euclidean nearest particle. This may mean that particle identification and tracking is performed more efficiently.

Figure 4 shows an example of a particle track 15 formed by a particle as it moves within the fluid. As the movement is due to Brownian motion, the particle is seen to take a 'random walk' between a start position 11 and a subsequent end position 12. In a first frame the particle is at a first position 13. In a second, subsequent frame the particle is at a second position 14. The vector between each successive pair of vertices of the particle track 15 therefore corresponds to the movement of the particle between two successive frames of the video (with each vertex corresponding with a position in a frame).

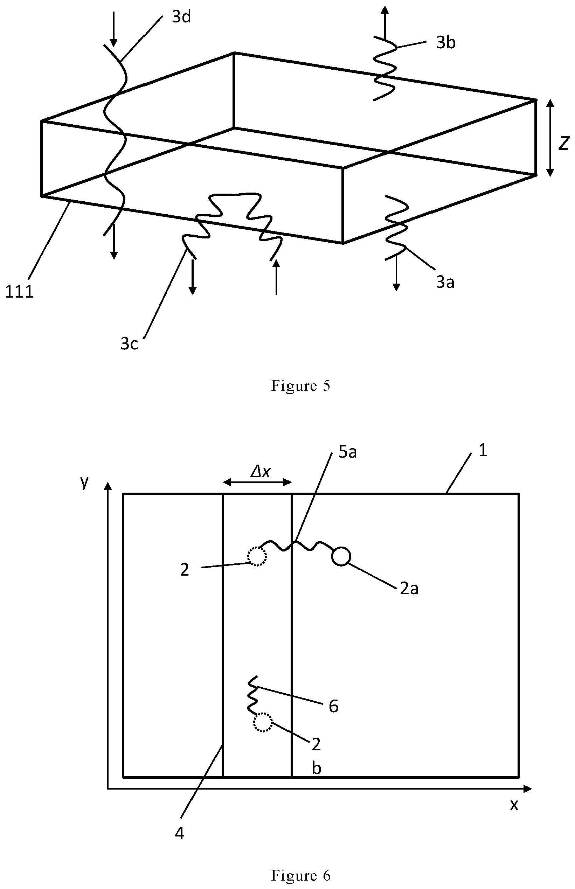

Figure 5 shows examples of particle tracks for particles moving into/out of the detection region 111 in the z direction. Particle track 3a shows a particle leaving the detection region 111 through the bottom face. Particle track 3b shows a particle leaving the detection region 111 through the top face. Particle track 3c shows a particle entering the detection region 111 through the bottom face and subsequently leaving the detection region 111 through the same bottom face. Particle track 3d shows a particle entering the detection region 111 through the top face and subsequently leaving the detection region 111 through the opposing bottom face.

However, the video is of course a two-dimensional image and cannot be used to determine particle positions in the z direction. As such, the particle tracks shown in Figure 5 would be seen in the video as particles appearing/disappearing from the video, as the particles move into/out of the detection region 111 in the z direction.

Particles will similarly enter and exit the detection region in the x and y directions by passing through the side faces of the detection region. The movement of particles is not confined to motion purely along the x,y,z axes. In reality, particle movement will be a three dimensional 'random walk', and each 'step' shall have x, y and z components.

Figure 6 illustrates how a measured property of the particle tracks is used to determine the depth of the detection region according to an embodiment of the invention. Figure 6 schematically illustrates a video image 1. The video 1 may comprise any number of frames in order to show the movement of particles.

The computer is configured to analyse the motion of particles to determine particle tracks, as in conventional NTA. A subsection 4 of the video 1 is defined. The subsection may be a vertical x-strip 4 taken across the video 1, as shown in Figure 6, with a variable strip width *Δx.* The x-strip 4 is defined by a pair of parallel vertical faces that run across the video 1 in the y direction, and by a pair of parallel horizontal faces that run across the video in the x direction. In this example, the horizontal faces are at the edges of the video, and the vertical faces are the full height of the video. Other shapes of strip can also be used.

Figure 6 shows example particle tracks for two particles moving within the strip 4. A first particle is shown to move from a starting position 2 within the strip 4 to a subsequent position 2a outside the strip 4 at an end time. This example first particle moves mainly in the x direction, producing a first particle track 5a. As the first particle moves in the x direction, it remains within the volume of the detection region captured by the video 1. It can consequently be determined by the computer that the first particle track 5a crosses one of the faces of the strip 4.

The computer is configured to classify the first particle track 5a as an '*x* track'. An x track is a particle track that is observed to cross one of the parallel vertical faces of the strip 4, corresponding to a particle being observed by the apparatus entering or exiting the strip 4.

A second particle is shown to move from a starting position 2b within the strip 4. The particle moves along a second particle track 6. The second particle has a z axis movement component and exits the strip 4 through the top or bottom face before the end time. As such, the second particle cannot be seen at the end time. The second particle track 6 is observed to end without passing through a face of the strip 4.

The computer is configured to classify the second particle track 6 as a '*z* track' or an 'unobservable track'. A *z* track is particle track that passes through the top or bottom of the detection region, corresponding to a particle entering or exiting the strip 4 without its track passing through one of the faces of the strip 4.

The computer is configured to track a plurality of particles within the strip 4 and classify all particle tracks as *x* tracks and *z* tracks.

In some embodiments of the invention, the parallel pair of vertical faces of the strips may span the entire height of the video, as shown in Figure 6. In other embodiments, the strips may not span the entire height of the video, instead each strip having four faces entirely within the video. This may improve the accuracy of determining the depth of the detection region, by reducing false track classifications.

For example, consider an x-strip taken across the entire height of a video, with a particle very close to the top edge of the strip. If the particle moves in the y direction, it may move off the top of the image (out of the detection region) and therefore not appear in the subsequent video frame. As the computer has not observed the particle exit the strip but the particle has disappeared, this particle may be misidentified as a *z*-track. If, however, the dimensions of the strip are limited to being inside the video image (so that there is a 'border region' around all four sides of the strip), the particle would be observed in the subsequent frame to have moved in the y direction. The computer, configured to classify *x*-tracks and *z*-tracks, may be further configured to discard this particle track from the analysis. The dimensions of the border region may be selected to correspond with a maximum expected movement of the particle between successive frames.

The computer is further configured to analyse a property of the *x* tracks and *z* tracks as the width *Δx* of the strip 4 is varied. The property may be the number of *x* tracks and *z* tracks observed in a defined time-period.

For example, the computer may be configured to analyse a strip width of 100 pixels. The computer would record the number of *x* tracks and *z* tracks observed over a period of time. This process would then be repeated with different strip widths, for example in steps of 1 pixel, 10 pixels, or 50 pixels.

By analysing the change in the number of *x* tracks and *z* tracks recorded, the computer is configured to automatically determine the depth of the detection region.

If a very narrow strip is used (i.e. width *Δx* << depth *z* ), most particle tracks will exit the strip in the x direction before having an opportunity to exit the detection region in the z direction. Therefore, the number of *x* tracks will be large, and the number of *z* tracks will be small. Conversely, if a very wide strip is used (i.e. *Δx* >> *z*)*,* very few particles will exit the strip in the x direction before first exiting the detection region in the z direction. As such, the number of *x* tracks will be small, and the number of *z* tracks will be large.

The computer is configured to find a strip width where the number of *x* tracks and *z* tracks are equal (or at least most similar). The depth z of the detection region is then determined to be the same as this intermediate strip width.

As the movement of the particles of the particles is due to Brownian motion, the movement of the particles is random (stochastic) and will tend towards being equal on average in the x, y, and z directions over a sufficient sample of tracks. Statistically, the number of *x* tracks will tend to equal the number *z* tracks when the width of the strip *Δx* equals the depth of the detection region. This is because when *Δx* = *z,* the surfaces areas of the two vertical strip faces and the top and bottom of the strip are equal. Therefore, the 'flux' of particles moving through these faces should be equal, meaning the number of *x* tracks and *z* tracks is equal.

In many NTA applications, the sample is flowed through the sample cell during measurement. This produces a component of sample movement that is not Brownian. It is known to correct for such particle drift in NTA analysis. Measured particle tracks referred to herein should be understood as being corrected for particle drift. One way to correct for particle drift is to subtract an average velocity of the particles. Since the average Brownian motion is zero over all particles, this will leave only the Brownian component of particle movement.

In other embodiments of the invention, the measured property of the particle tracks may be a property other than the number of tracks. For example, the average length of *x-*tracks and *z*-tracks before the particle exits the strip may be measured and compared. Alternatively, the average number of steps in the *x*-tracks and *z*-tracks before the particle exits the strips may be measured. The number of steps may be the number of frames in which the particle is observed to move. As with number of tracks, track length and step number are random in three directions and expected to be equal for *x*-tracks and *z*-tracks when the intermediate strip width is found.

In some embodiments of the invention, the computer may be configured to analyse a plurality of strips for each strip width. This may improve the accuracy of the depth determination. The plurality of strips may be separate from one another, directly adjacent to each other, or may overlap partially or entirely.

The plurality of strips may be configured to encompass the whole image area. For example, five 100 pixel wide strips could be used to analyse an image 500 pixels wide. In another example, 400 different 100 pixel wide strips can be generated by stepping a 100 pixel wide strip over a 500 pixel wide image with a step of 1 pixel. In some embodiments, the edges of the image may be avoided, so that particles can be tracked across the x and y edges of the strip with greater certainty. For example, an exclusion border may be defined about the edge of the image based on an expected maximum particle movement between successive frames.

Alternatively, the strips may not cover the whole detection region, but could be selected to cover areas of interest in the image. For example, a strip may be taken across the centre of the image, and additional strips taken close to the corners/edges of the image. Many imaging systems have optical aberrations, meaning that the depth of the detection region (i.e. the focal depth) may be different at the centre of the image to the corners/edges of the image. By taking strips at different regions of the image, the computer may be configured to account for differences in detection region depth across the image.

The results for the measured property for each of the plurality of strips of each width may be mathematically combined. For example, the number of tracks across the plurality of strips of each width may be summed (where the same number of strips for each width is used), or a mean or median track length may be calculated for each strip width. Alternatively, results for strips taken in different areas of the image may be kept separate, so that a depth is calculated for a plurality of areas of the detection region. This may allow differences in the depth of the detection region across (such as those caused by optical aberrations) to be calculated.

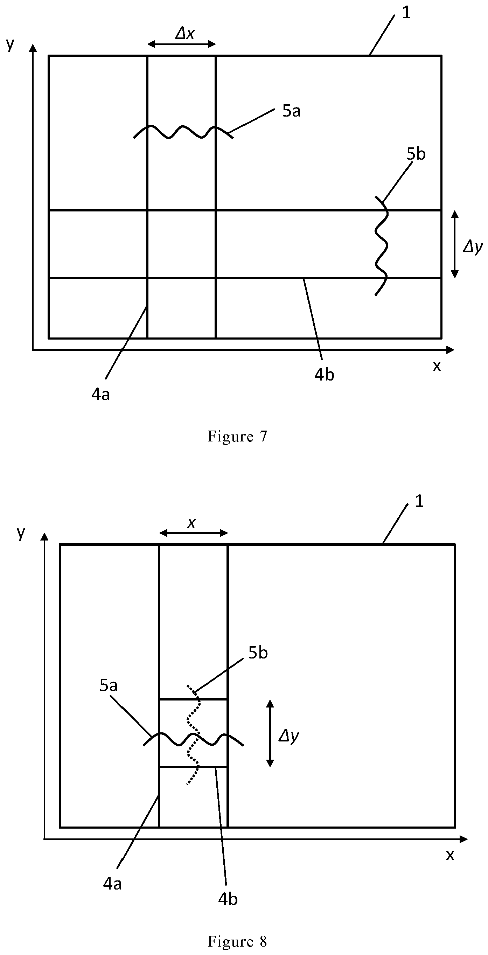

Figure 7 shows how the process described in Figure 6 is equally applicable in the y direction. As discussed, a vertical x-strip 4a of the video 1 may be analysed as the width *Δx* is varied. Equally however, a horizontal y-strip 4b may be analysed as width *Δy* is varied. In this case *y* tracks 5b are classified by the computer rather than *x* tracks 5a, but all of the processing discussed for the x direction case is equally applicable. In some embodiments, the computer may be configured to take a combination of x-strips and y-strips and combine the results to determine the depth of the detection region.

Figure 8 shows a modified version of the process described in Figure 7. This modified process was used in experimental testing to verify the validity of the depth determination technique. The computer is configured to analyse a video 1 of particles moving in the detection region. But rather than trying to determine the depth (in the unobservable z direction), analysis is performed in the observable x and y directions.

The width of strip 4a is set at a known value *x.* A sub-strip 4b is then sampled across the strip 4a, the sub-strip having a variable width *Δy.* The computer is configured to count the number of observed x tracks 5a and the number of observed *y* tracks 5b in each of a plurality of sub-strips 4b sampled from the strip 4a as *Δy* was varied. A plurality of y-strips within the x-strip can be defined when the width of the y-strip is less than the total height of the x-strip (for example, the y-strips may be tiled so that they are non-overlapping, or stepped over the x-strip if they are overlapping). For small heights *Δy*, more sub-strips 4b are sampled from the strip 4a. Using the same logic as discussed previously, the number of *x* tracks and *y* tracks should be equal when *Δy* = *x,* allowing *x* to be determined experimentally.

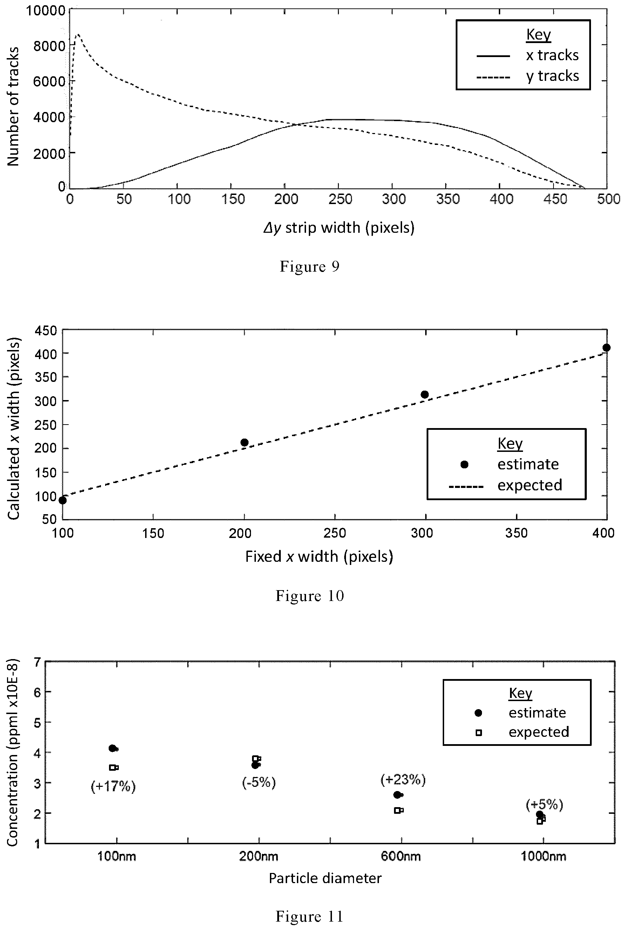

Figure 9 shows a plot of the number of *x* tracks and *y* tracks as a function *of Δy.* In this test the width *x* of the strip 4a was set to 200 pixels, and all possible sub-strips 4b were sampled from strip 4a for each sub-strip width *Δy.* Figure 9 shows that the number of *x* tracks and *y* tracks is equal at approximately 200 pixels, as expected.

As expected, the number of *y* tracks is very high when *Δy* is small and decreases as *Δy* increases. The number of *x* tracks initially increases as *Δy* increases, as expected, but then decreases at higher values of *Δy.* This is because the number of tracks shown in Figure 9 is a cumulative total taken across all possible strips for each *Δy* width. With wider strips, fewer sub-strips 4b can be sampled from the strip 4a, resulting in a decrease in total tracks at high values of *Δy.*

Figure 10 shows a plot wherein the process described in Figure 9 has been repeated for a number of different *x* widths. Figure 10 shows that the calculated value of *x* is close to the known values *of x* = 100, 200, 300 and 400 pixels. The maximum error between the estimate *x* width and the expected value was found to be just 6.5%.

According to another embodiment of the invention, the computer may be further configured to calculate a concentration of the particles in the fluid. The computer may be configured to count the number of particles *N* in the video (corresponding to the number of particles in the detection region). The volume *V* of the detection region can be calculated from the planar area of the detection region (known from the area of the sample captured by the imaging system) and the determined depth. Measurements made in pixels may be converted to physical dimensions using known properties of the apparatus. The concentration *C* may then be calculated as *N*/*V.*

Figure 11 shows experimental concentrations obtained for several samples with differing particle diameter, using an apparatus according to an embodiment of the invention, and following the approach outlined above. Concentrations are given as parts per million (ppml). Figure 11 shows that the estimated concentrations obtained using the apparatus of the present invention is very similar to the known concentrations of the samples.

Although example embodiments have been described, these are not intended to limit the scope of the invention, which should be determined with reference to the accompanying claims.

## Claims

1. An apparatus for characterising particles using nanoparticle tracking analysis, comprising:
a cell for containing a sample comprising a plurality of particles suspended in a fluid;
a light source configured to illuminate the sample;
an imaging system configured to collect light scattered or fluoresced by particles moving within the cell and within a detection region of the imaging system and capture a video of the particles moving within the detection region; and
a computer configured to process the video to automatically determine a depth of the detection region, determining the depth of the detection region comprising:
tracking the particles moving within the detection region, thereby producing a track for each of the particles; and
analysing how a measured property of the tracks within a subsection of the video changes as the size of the subsection is varied.

2. The apparatus of claim 1, wherein the subsection is a parallelogram strip taken across the video, the strip defined by a parallel pair of faces.

3. The apparatus of claim 2, wherein the size of the subsection is varied by changing the width of the strip between the pair of faces; and
wherein the computer is further configured to record the measured property of the tracks as a function of the strip width.

4. The apparatus of claim 3, wherein the computer is further configured to analyse the tracks within the subsection in order to classify each of the tracks as either:
(i) an *x*/*y* track, wherein the particle track is observed to cross one of the pair of faces; or
(ii) a *z* track, wherein the particle track begins and/or ends within the strip but is not observed to cross through one of the pairs or faces;
and wherein the computer is further configured to record the measured property separately for the *x*/*y* tracks and the *z* tracks.

5. The apparatus of claim 4, wherein:
the computer is further configured to compare the measured property for the *x*/*y* tracks and the measured property for the *z* tracks for each strip width; and
the depth of the detection region is determined by finding a strip width where the measured property of the *x*/*y* tracks and the *z* tracks are equal or most similar, the determined depth of the detection region being equal to the strip width.

6. The apparatus of claim 4 or claim 5, wherein the measured property of the tracks is selected from:
a count of the number *of x*/*y* tracks and the number of *z* tracks observed within a predefined time period;
a measure of the length of the *x*/*y* tracks and the length of the *z* tracks, the length of each track being the distance moved by the particle within the strip; or
a measure of the number of steps within the *x*/*y* tracks and the number of steps within the *z* tracks, the number of steps in each track being the number of frames of the video in which the particle moves within the strip.

7. The apparatus of claim 6, wherein the measured property is the count of the number of *x*/*y* tracks and the number of *z* tracks.

8. The apparatus of any of claim 3 to claim 7; wherein a plurality of strips for each strip width are analysed, and the measured track property for the plurality of strips of each strip width are mathematically combined.

9. The apparatus of claim 8, wherein the plurality of strips are configured to:
cover a substantial portion of or the whole area of the detection region; and/or
cover a plurality of areas of the detection region, the plurality of areas having different detection region depths.

10. The apparatus of any preceding claim, wherein tracking the particles comprises identifying a particle from a current frame of the video in a subsequent frame of the video.

11. The apparatus of claim 10, wherein identifying the particle in the subsequent frame of the video comprises identifying the nearest particle in the subsequent frame.

12. The apparatus of claim 12, wherein identifying the nearest particle in the subsequent frame comprises identifying the nearest particle within a tracking distance limit.

13. The apparatus of any preceding claims, wherein the computer is further configured to calculate a concentration of the particles suspended in fluid, calculating the concentration comprising:
calculating the volume of the detection region using the determined depth; and
measuring the number of particles within the detection region.

14. A computer implemented method for determining a depth of a detection region from video data obtained by nanoparticle tracking analysis, the method comprising:
tracking particles moving within the detection region, thereby producing a track for each of the particles;
measuring a property of the tracks within a subsection of the video;
analysing how the measured property of the tracks within a subsection of the video changes as the size of the subsection is varied.

15. A machine-readable non-volatile storage medium comprising instructions for configuring a processor to perform a method, the method comprising:
determining the depth of a detection region from video data obtained by nanoparticle tracking analysis, determining depth comprising:
tracking particles moving within the detection region, thereby producing a track for each of the particles;
measuring a property of the tracks within a subsection of the video;
analysing how the measured property of the tracks within a subsection of the video changes as the size of the subsection is varied.
